# EUROPÄISCHE PATENTANMELDUNG

(11) **EP 0 818 373 A2**
(43) Veröffentlichungstag der Anmeldung: **14.01.1998**
(21) Anmeldenummer: 97111310.5
(22) Anmeldetag: 04.07.1997
(51) Int. Cl.: B61D 17/04, B62D 33/04, B62D 31/02

(54) **Schienenfahrzeug**

(30) Priorität: 13.07.1996 DE 19628305
(71) Anmelder: Hoogovens Aluminium Profiltechnik Bonn GmbH, 53117 Bonn (DE)
(72) Erfinder: Vogt, Rolf Dipl.-Ing., 53123 Bonn (DE); Elsner, Olaf, Dipl.-Ing., 53117 Bonn (DE); Schleef, Wolfgang, 53123 Bonn (DE)
(74) Vertreter: Müller-Wolff, Thomas, Dipl.-Ing.

(57) **Zusammenfassung**

Die Erfindung betrifft ein Schienenfahrzeug mit einem aus mehreren Baugruppen, wie Boden-, Seiten- und Dachteilen, zusammengefügten Wagenkasten, die Einbauten und Anbauten, wie Sitze, Elektrogeräte, Klimaanlagen etc. enthalten, wobei als Verbindungselement zwischen den Boden-, Seiten- und Dachteilen langgestreckte, beidseitig die Elemente umgreifend und in Fahrtrichtung verlaufende Klemmprofile (18,19) verwendet werden, die von der Fahrzeug-Innenseite her mit den zu verbindenden Baugruppen über an diesen stirnseitig ausgebildeten Schwalbenschwanz-Führungen (30,31) verspannt werden. Die Erfindung betrifft weiterhin ein Verfahren zur Herstellung eines Schienenfahrzeugs.

## Beschreibung

Im Schienenfahrzeugbau hat sich Aluminium als Werkstoff für die Wagenkästen weitgehend durchgesetzt. Hierbei werden Einzelprofile aus Strangpreßteilen durch Schweißen, Nieten oder Kleben zu selbsttragenden Aufbauten zusammengesetzt.

Im Aluminium-Taschenbuch, 14. Auflage 1983, Seite 893 ff. ist die sogenannte Differential- und Integralbauweise für Aluminium-Wagenkästen beschrieben. Die Integralbauweise besteht aus aneinander geschweißten, parallel-laufenden Breitprofilen ggf. mit angeschweißten Versteifungen. Die Bodengruppe wird durch Mehrkammerhohlprofile gebildet. Ein Dachlangträger kann als Vielfach-Funktionsprofil ausgebildet werden, in dem die Türmechanik, die Befestigung der Belüftungskomponenten und die Anschluß- und Dichtungsprofile zu den Seitenwand und Dachprofilen integriert sind.

Ein Nachteil der bekannten Integral- und Differentialbauweise besteht darin, daß der Wagenkasten aus mehreren, sehr individuell gestalteten Profilteilen als geschlossene Rohbaugruppe zusammengesetzt wird und danach erst der Innenausbau, die Lackierung und Komplettierung mit Anbauelementen usw. erfolgt. Zum Zusammenbau der Rohbaugruppen wird eine komplizierte und daher sehr aufwendige Montagevorrichtung benötigt, die eine Parallelausrüstung mehrerer Rohbaugruppen gleichzeitig nicht gestattet. Der Fertigungsablauf wird durch die eingeschränkte Zugänglichkeit und räumliche Enge des Wagenkastens behindert.

Durch den vermehrten Einsatz von modernen Werkstoffen im Innenausbau von Schienenfahrzeugen ergibt sich die Möglichkeit, die Inneneinrichtung, insbesondere die Bestuhlung, die Polsterung und Beplankung der Seitenflächen dem jeweiligen Verwendungszweck individuell anzupassen. Andererseits besteht Bedarf nach einem Wechsel von Einrichtungen, weil sich der aktuelle Geschmack geändert hat oder weil infolge erhöhter Abnutzung oder Vandalismus die Einrichtung beschädigt wurden. Ferner erscheint es wünschens-wert, bei häufig sich ändernden Einsatzbedingungen auch die Einrichtung der Schienenfahrzeuge, z.B. für Gepäck-, Schlafwagen oder Reisegruppen, schnell auswechseln zu können.

Aufgabe der vorliegenden Erfindung ist es daher, die eingangs beschriebenen Nachteile der Differential- und Integralbauweise von Schienenfahrzeugen zu beseitigen und ein Schienenfahrzeug sowie ein Verfahren zu seiner Herstellung angeben zu können, bei dem die einzelnen Baugruppen praktisch komplett fertiggestellt und bis zur Endmontage oder bis zum Austausch baukastenartig bereitgehalten werden können. Die Endmontage erfolgt ohne spezielle Klemmvorrichtungen im Parallelbetrieb bei teilweise geöffnetem Wagenkastenaufbau, wobei als reversibles Verbindungsverfahren eine Kaltfügetechnik mit Toleranzausgleich eingesetzt wird.

Die erfindungsgemäße Fügetechnik erlaubt auch einen nachträglichen Austausch von einzelnen Bauelementen, eine Umgruppierung und Umgestaltung der Baugruppen sowie eine gute Zugänglichkeit der Inneneinrichtung durch großflächiges Öffnen des Wagenkastens.

Im folgenden wird die Erfindung anhand mehrerer Ausführungsbeispiele näher erläutert. Es zeigen:
- Fig. 1: Übersichtszeichnung von einem erfindungsgemäß ausgestalteten Wagenkasten;
- Fig. 2: Teilquerschnitt durch eine Verbindungszone in Kaltfügetechnik ausgeführt;
- Fig. 3: Seitenansicht eines erfindungsgemäßen Wagenkasten-Aufbaus in Modultechnik;
- Fig. 4: Prinzipbild eines stromlinenförmig zugespitzten Wagenkasten-Aufbaus in Querschnittslage (Draufsicht);
- Fig. 5: Schwalbenschwanz-Führung als separates Strangpreßteil;
- Fig. 6: Klemmprofil mit unterschiedlicher Fußbreite B.

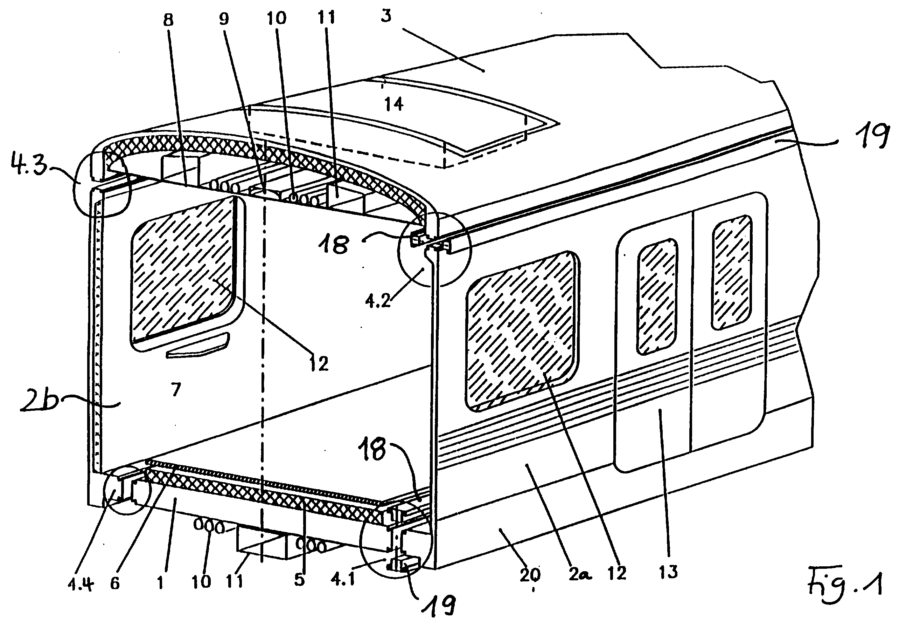

In Figur 1 sind als Baugruppen ein Bodenteil 1 in Form eines Untergestells, Seitenwände 2a, 2b und ein Dachteil 3 als teilweise komplettierte Rohbau-Gruppen dargestellt.

An den Verbindungsstellen 4.1, 4.2, 4.3, 4.4 werden die erfindungsgemäß gestalteten Klemmprofile 18, 19 vor der Montage in ihre Endposition gebracht und dabei auf Abstand gehalten, wobei die an den Verbindungselementen angeordneten Keilflächen 32 - 35 und die Schwalbenschwanz-Führungen 30, 31 eine Zentrierung ermöglichen.

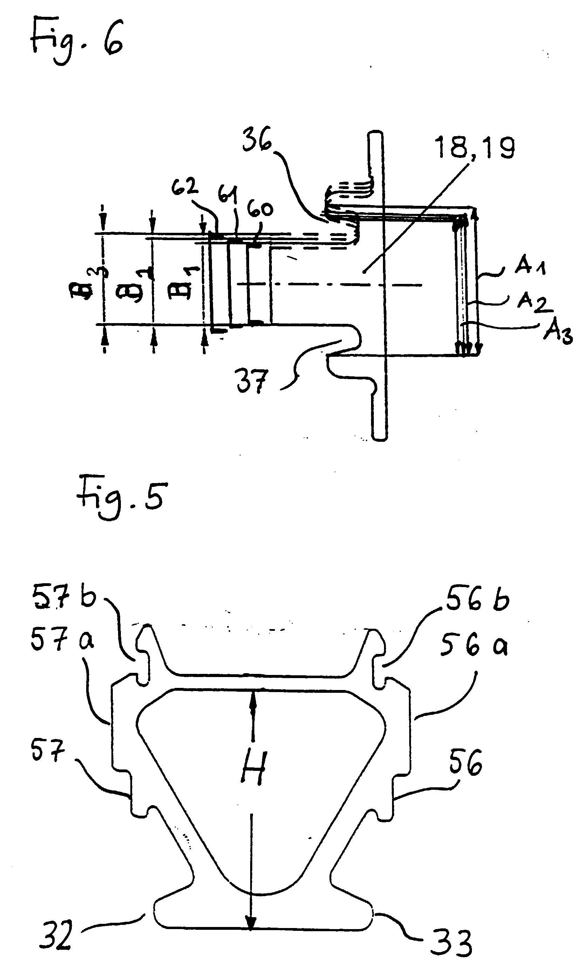

Durch Wahl der Breite B am Fußende der pilzförmigen Klemmprofile 18, 19 ist eine Einstellmöglichkeit für die Baumaße des Wagenkasten-Aufbaus gegeben. Bei geringfügigen Schwankungen, z.B. in der Bauhöhe eines Wagenkastens, kann der Höhenunterschied entweder durch Klemmprofile mit verschiedener Fußbreite B oder durch aufsteckbare Zusatzprofile 60, 61, 62 (siehe Fig. 6) ausgeglichen werden. Es ist auch möglich, die separat durch Strangpressen hergestellte Schwalbenschwanz-Führung 30, 31 mit verschiedener Kopfhöhe H auszubilden, so daß ganz individuell angepaßte Wagenhöhen oder -breiten herstellbar sind.

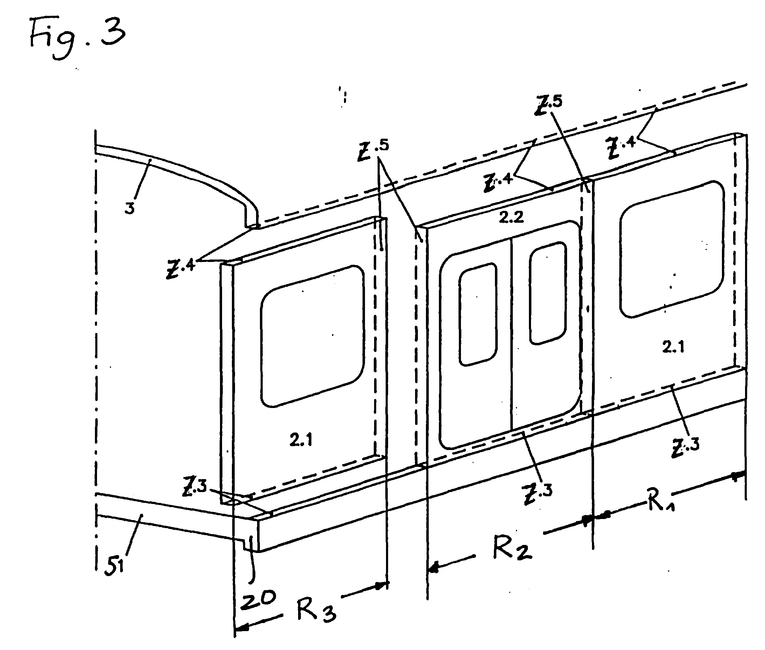

Die Lage der Verbindungszonen 4.1, 4.2, 4.3, 4.4 wird in bevorzugter Weise so gewählt, daß der Längsträger 20 zur Seitenwand 2a gehört. Es kann aber auch u.U. zweckmäßig sein, den Längsträger in das Boden-Untergestell 1 zu integrieren, wobei sich eine neue Gestaltung der Bodengruppe 51 gemäß Figur 3 ergibt.

Die Rohbaugruppen werden vor dem Zusammenbau mit allen Anbauelementen, wie Schall- und Wärmeisolierung 5, Fußbodenbelag 6, Innenverkleidungselementen 7, Innendecke 8 einschließlich Beleuchtung 9 sowie Kabel/Rohrleitungen 10 und Luftkanälen 11 komplettiert. Auch die Fenster 12, Türen 13 und Dachklimageräte 14 lassen sich in die Rohbau-Gruppen integrieren, so daß nach der Lackierung komplett vormontierte Baugruppen-Einheiten zur Endmontage bereitstehen.

Zweckmäßigerweise wird zuerst ein offener Wagenkasten aus den Baugruppen Boden/Untergestell 1 und Seitenwänden 2a, 2b montiert, damit - bevor das Dachteil aufgesetzt wird - schwere Einrichtungsteile, wie Sitze oder Elektrogeräte, von oben in das Wageninnere eingebaut werden können.

Die Kaltfügeverbindungen sollen immer so angeordnet sein, daß das Klemmprofil 18 mit den Durchgangsbohrungen 48 zum Wageninneren hinweist, während das Klemmprofil 19 mit den Gewinde-Sacklöchern 49 zum Wagenäußeren eine geschlossene Oberfläche aufweist. Falls erforderlich läßt sich eine derartige Verbindung auch vom Wageninneren her leicht öffnen, wobei im Ausführungsbeispiel nach Figur 1 lediglich der Fußbodenbelag 6 an den entsprechenden Stellen angehoben werden muß, damit die Verschraubung an den Klemmprofilen 18 zugänglich ist.

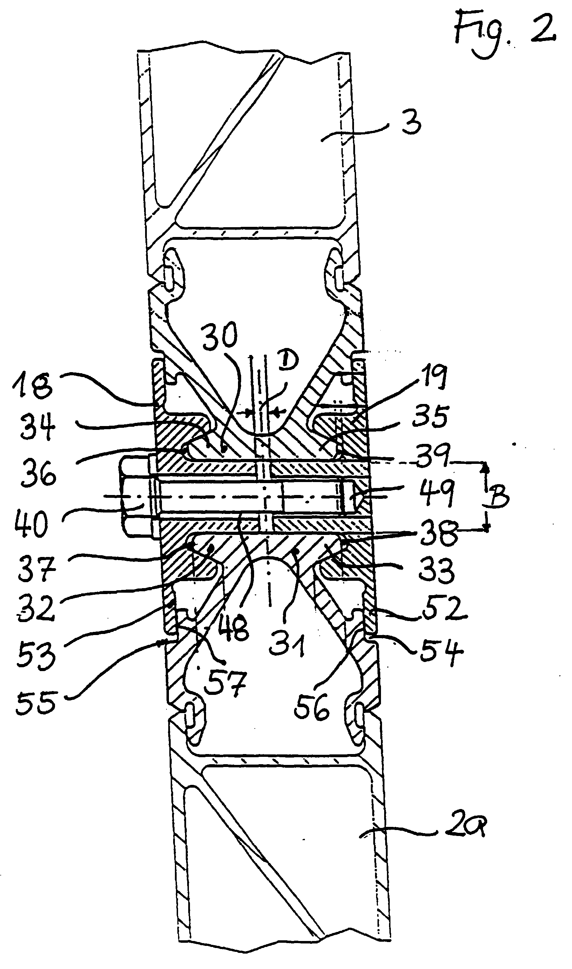

Zur Verbesserung der Dichtigkeit ist das wagenaußenliegende Klemmprofil 19 mit federnden, die Spaltöffnungen 54, 55 überdeckenden Rändern 52, 53 ausgebildet. Figur 2 zeigt einen Teilquerschnitt, bei dem die federnden Ränder 52, 53 in einer entsprechenden Vertiefung 56, 57 der Seitenteile der Schwalbenschwanz-Führungen 30, 31 aufliegen und somit einen bündigen Abschluß an der Verbindungsstelle ermöglichen.

In einer bevorzugten Ausführungsform sind gemäß Figur 3 einzelne Baugruppen, wie z.B. bei der Seitenwand, ein Fenstermodul 2.1 und ein Türmodul 2.2 mit gleichem Rastermaß R ausgebildet. Dadurch kann das Baukasten-System noch weiter verbessert werden.

Durch Fortentwicklung der Modulbauweise kann der Gesamtwagenkasten auch eine variable Grundrißgestaltung erhalten. So sind Großraumwagen und Doppelstockwagen in Lang- und Kurzausführungen möglich und auch innerhalb eines Wagenkasten-Aufbaus kann die Integration eines Gepäckabteils, eines Restaurant- oder Imbißabteils oder auch eines Gerätewagens mit unterschiedlicher Baulänge erfolgen. Die Verbindungszonen Z3, Z4, Z5 können mit den erfindungsgemäßen Verbindungselementen überbrückt werden.

Anstelle der bisherigen Verbindungstechnik durch Schweißen wird eine besondere Kaltfügetechnik verwendet, die die Nachteile der Schraub- und Nietverbindungen überwindet und dabei folgende Vorteile aufweist:
1. Es werden großflächige Verbindungen in Kaltfügetechnik verwendet.
2. Es ist eine Toleranzausgleich für die Außenmaße des Wagenkasten-Aufbaus bzw. der Baugruppen möglich.
3. Die Klemmprofile sind vorbereitet und brauchen während der Montage ebenso wie die Baugruppen nicht spanend bearbeitet zu werden.
4. Es handelt sich um eine lösbare Verbindung, bei der die vorbereitende Bearbeitung ausschließlich in den Verbindungsprofilen und nicht in den Baugruppen erfolgt.
5. Es handelt sich um eine zweischnittige, linienhafte Verbindung im Gegensatz zu einer punktuellen Schraubverbindung mit Verstärkungsquerstreben.
6. Es werden nur einfache Haltevorrichtungen benötigt.
7. Die zu verbindenden Teile müssen nicht ineinander verhakt werden, sondern zentrieren sich durch die erfindungsgemäßen Klemmprofile selbsttätig.
8. Die Montage erfolgt von der Innenseite her, wobei die Verteilung der Klemmpunkte in Abhängigkeit von der Beanspruchungsart und Intensität erfolgt.
9. Auswahl der für die Verbindungstechnik verwendeten Materialien in Übereinstimmung mit den jeweiligen Festigkeitsanforderungen.

Die in Figur 2 näher dargestellte neue Klemmverbindung besteht aus zwei in ihren Außenabmessungen im wesentlichen identischen Spannschienen, mit denen die Kopfteile der Baugruppen in einem Abstand B₀ verspannt werden. Durch Wahl der Breite B kann die Maßtoleranz zwischen den Baugruppen eingestellt werden und durch Wahl der Distanz D wird die Stabilität der Verbindung eingestellt. Ein Optimum ergab sich bei D = 2 - 7 mm.

Vorzugsweise sind die Stirnseiten jedes der Baugruppen-Elemente in der Verbindungszone als glatte Strangpreßprofilabschnitte ausgebildet. Jedes Baugruppen-Element weist ein Kopfteil 32, 33 mit Schulterflächen auf, die sich zu den Stegräumen 36, 37 hin keilförmig verjüngen. Mit dem Keilwinkel α wird die Pressung und damit die für die Kraftübertragung erforderliche Spannkraft eingestellt.

Um die Außenseite der Klemmverbindung zusätzlich gegen Feuchtigkeit abzudichten, kann in die Spaltöffnungen 54,55 ein Dichtungsprofil eingelegt werden. Die Auflagefläche der pilzhutförmigen Klemmleiste kann eine Einsenkung 56,57 enthalten, so daß die Außenfläche, gebildet aus Klemmschiene 10 und Baugruppen-Elementen 2a, 3 glattflächiger erscheint.

Figur 5 zeigt in einem Teilausschnitt nach Figur 2 die erfindungsgemäß ausgebildete Schwalbenschwanz-Führung 30, 31 als Strangpreßprofil. Mit der Kopfhöhe H kann die Entfernung zwischen zwei Bauelementen eingestellt werden. Dadurch lassen sich geringfügige Toleranzschwankungen oder auch unterschiedliche Bauhöhen und Außenabmessungen ausgleichen.

In Abb. 5 ist außerdem der Keilwinkel α angegeben, mit dem die Flächenpressung zwischen den Klemmprofilen 18, 19 und den keilförmigen Kopfschienen 32 - 35 einstellbar ist. Vorteilhafterweise liegt der Winkel α zwischen 30° und 60°.

Ferner ist in Figur 5 je eine Vertiefung 56, 57 in den zur Außenseite hinweisenden Seitenflächen 56a, 57a der Schwalbenschwanz-Führung eingearbeitet. Daran schließt sich gemäß Darstellung nach Abb. 5 von der Vertiefung nach unten verlaufend auf jeder Außenseite eine Schweißbadstütze 56b bzw. 57b an.

In Figur 6 ist schematisch die Ausbildung der Klemmprofile 18, 19 mit unterschiedlichen Fußbreiten B₁ - B₃ dargestellt. Gleichzeitig sind verschiedene Abstände A₁ -A₃ der keilförmigen Seitenwand der Stegräume 36, 37 mit gestrichelter Linie angedeutet.

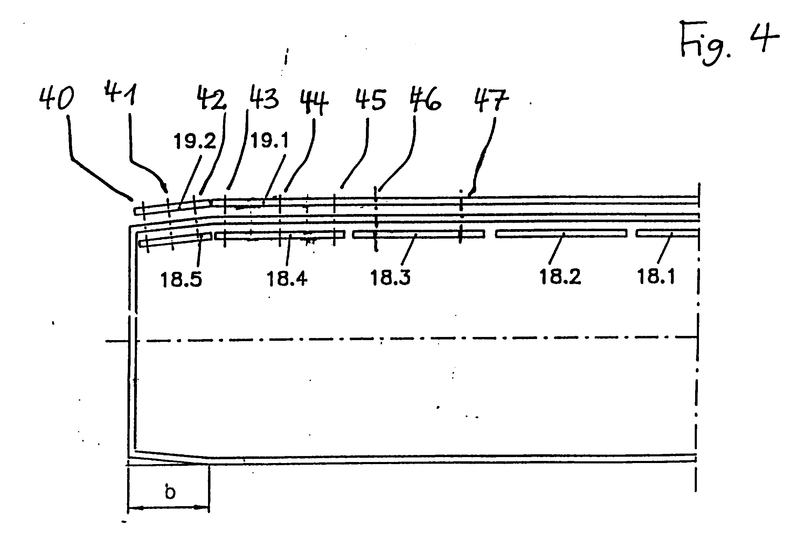

Durch die vorstehend beschriebenen Variationsmöglichkeiten können auch nicht-geradlinige Verbindungen, wie z.B. die Boden-Seitenwand-Verbindung bei stromlinienförmig zugespitzten Wagenkästen oder gekrümmte Übergangszonen vom Dachteil 3 in die Seitenwand 2 problemlos hergestellt werden. Dies ist in Figur 4 anhand des Querschnitts eines zugespitzten Wagenkastens in Draufsicht dargestellt. Für die Außenseite werden zwei Klemmprofile 19.1, 19.2 im Winkel zueinander mit dem gebogenen Längsträger 20a verbunden. Auf der Innenseite können mehrere Klemmprofile 18.1 - 18.5 verwendet werden, da hier keine nachteiligen Spaltwirkungen zu beachten sind.

Es sei noch darauf hingewiesen, daß die Klemmprofile 18.3, 18.4 und 18.5 mit jeweils einer unterschiedlichen Anzahl von Zugankern 40 - 47 ausgestattet sind. Hierdurch kann der unterschiedlichen Belastung der Klemmprofile an der Verbindungszone Rechnung getragen werden.

Es ist auch möglich, das außenliegende Klemmprofil 19 so zu bearbeiten, daß es als ein Stück um den Krümmungswinkel des zugespitzten Wagenkasten-Vorderteils b gebogen werden kann. Hierzu werden beispielsweise die seitlichen Begrenzungsflächen der Stegräume abschnittsweise entfernt. Es könnte aber auch die als "Hutkrempe" bezeichnete Verdickung der Klemmprofile 18, 19 in bekannter Weise gestaucht oder durch thermische Behandlung verformt werden.

## Patentansprüche

1. Schienenfahrzeug mit einem aus mehreren Baugruppen, wie Boden-, Seiten- und Dachteilen, zusammengefügten Wagenkasten, die Einbauten und Anbauten, wie Sitze, Elektrogeräte, Klimaanlagen etc. enthalten,
dadurch gekennzeichnet,
daß als Verbindungselement zwischen den Boden-, Seiten- und Dachteilen langgestreckte, beidseitig die Elemente umgreifend und in Fahrtrichtung verlaufende Klemmprofile (18, 19) verwendet werden, die von der Fahrzeug-Innenseite her mit den zu verbindenden Baugruppen über an diesen stirnseitig ausgebildeten Schwalbenschwanz-Führungen (30, 31) verspannt werden.

2. Schienenfahrzeug nach Anspruch 1,
dadurch gekennzeichnet,
daß die Seitenflächen in Modulweise ausgebildet sind, wobei Fenster- und Türmodule mit unterschiedlichen Längen auf einen Längsträger (20) aufgesteckt und durch untere und obere Klemmprofile (18, 19) sowohl mit dem Boden (1) als auch mit einem Dach (3) verbunden sind.

3. Schienenfahrzeug nach einem der vorhergehenden Ansprüche,
dadurch gekennzeichnet,
daß die Baugruppen und Module Rastermaße (R₁, R₂, R₃) aufweisen und jedes Modul innerhalb einer Baugruppe austauschbar ist.

4. Schienenfahrzeug nach einem der vorhergehenden Ansprüche,
dadurch gekennzeichnet,
daß die außen- und innenliegenden Klemmprofile (18, 19) jeweils eine pilzförmige Querschnittsform aufweisen, wobei unterhalb des Pilzhutes keilförmig sich nach unten erweiternde Stegräume (36, 37/ 38, 39) ausgebildet sind, in die entsprechend geformte keilförmige Kopfschienen (32, 33/ 34, 35) der Schwalbenschwanz-Führungen (30, 31) eingreifen und über Zuganker (40, 47) verspannt sind.

5. Schienenfahrzeug nach einem der vorhergehenden Ansprüche,
dadurch gekennzeichnet,
daß die zur seitlichen Begrenzung der Stegräume (36, 37/ 38, 39) unterhalb des Pilzhutes herausragende Hutkrempe aus Stahl besteht, in die hinein das aus einer Aluminium-Legierung stranggepreßte Kopfteil der Schwalbenschwanz-Führung (30, 31) eingreift.

6. Schienenfahrzeug nach einem der vorhergehenden Ansprüche,
dadurch gekennzeichnet,
daß die Breite B am Fußende der Klemmprofile (18, 19) variabel gestaltet ist, wobei die Distanz D der Fußenden der Klemmprofile (18, 19) zwischen 3 - 7 mm liegt.

7. Verfahren zur Herstellung eines Schienenfahrzeuges nach einem der vorhergehenden Ansprüche,
dadurch gekennzeichnet,
daß der Boden (1), die Seitenwände (2a, 2b) und das Dach (3) mit den Isolierungen, Leitungen, Fenstern und Türen komplettiert werden,
daß zunächst ein offener Kasten aus der Bodengruppe (1) und den Seitenwänden (2a, 2b) gebildet wird,
daß die Einbauten, wie Sitze, Elektrogeräte u.a. in das Schienenfahrzeug eingesetzt werden und anschließend das Dach aufgesetzt und damit der Wagenkasten geschlossen wird.

8. Verfahren nach einem der vorhergehenden Ansprüche,
dadurch gekennzeichnet,
daß die Baugruppen vor Komplettierung lackiert werden und erst bei der Endmontage die Verbindungselemente in Position gebracht werden, wobei ein Ausgleich in den Sollmaßen durch Verwendung von Klemmleisten mit unterschiedlicher Fußbreite B erfolgt.
